# EUROPÄISCHE PATENTSCHRIFT

(11) **EP 3 660 539 B1**
(45) Veröffentlichungstag und Bekanntmachung des Hinweises auf die Patenterteilung: **20.01.2021**
(21) Anmeldenummer: 19204613.4
(22) Anmeldetag: 22.10.2019
(51) Int. Cl.: G01S 7/481, G01S 17/42

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DE DÉTECTION D'OBJETS

(30) Priorität: 27.11.2018 DE 102018129972
(43) Veröffentlichungstag der Anmeldung: 03.06.2020
(73) Patentinhaber: SICK AG, 79183 Waldkirch (DE)
(72) Erfinder: Zwölfer, Ulrich, 79183 Waldkirch (DE)

(56) Entgegenhaltungen:
- DE-A1-102005 006 922
- US-A1- 2015 034 809
- US-B2- 9 442 285

## Beschreibung

Die Erfindung betrifft einen optoelektronischen Sensor und ein Verfahren zur Erfassung von Objekten in einem Überwachungsbereich nach dem Oberbegriff von Anspruch 1 beziehungsweise 15.

Ein bekanntes Verfahren für die optische Abstandserfassung ist die Lichtlaufzeitmessung. Man unterscheidet die pulsbasierte und die phasenbasierte Messung. In einem Pulslaufzeitverfahren wird ein kurzer Lichtpuls ausgesandt und die Zeit bis zum Empfang des zurückkehrenden Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Die Lichtlaufzeit wird dann über die Lichtgeschwindigkeit in einen Abstand umgerechnet.

Eine Herausforderung bei der Lichtlaufzeitmessung ist die robuste Erfassung auch geringer Nutzlichtpegel. Dazu werden in einigen optoelektronischen Sensoren Lawinenphotodioden eingesetzt (APD, Avalanche Photo Diode). Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist als bei einer einfachen PIN-Diode.

Eine noch größere Empfindlichkeit wird mit Lawinenphotodioden erreicht, die im sogenannten Geiger-Modus betrieben werden (SPAD, Single Photon Avalanche Diode). Hierbei wird die Lawinenphotodiode oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. Danach kommt die Lawine zum Erliegen (passive quenching) und steht für eine gewisse Totzeit nicht mehr zur Detektion zur Verfügung. Alternativ ist auch bekannt, die Lawine von außen zu erkennen und zu löschen (active quenching).

Eine SPAD zählt somit wie ein Geigerzähler Einzelereignisse. SPADs sind nicht nur hochempfindlich, sondern auch vergleichsweise kostengünstig und effizient in Silizium-Halbleitern zu integrieren. Eine Besonderheit ist die Tatsache, dass auch ein minimales Störereignis, wie ein Fremdlichtphoton oder Dunkelrauschen, das gleiche maximale Empfangssignal erzeugt wie ein Nutzlichtsignal. Um diesen Auswirkungen zu begegnen, werden in der Praxis mehrere SPADs gemeinsam ausgewertet. Bezüglich dieser und weiterer allgemeiner Eigenschaften von SPADs sei beispielhaft auf den Artikel Eisele, Andreas, et al. "185 MHz count rate, 139 dB dynamic range single-photon avalanche diode with active quenching circuit in 130 nm CMOS technology." Int. Image Sensor Workshop (IISW), Onuma, Hokkaido, 2011 verwiesen.

Der gemessene Abstand kann unmittelbar die Ausgabegröße des Sensors sein. Es gibt aber auch schaltende Systeme, die ein Objekt nur dann erfassen, wenn es sich in einem bestimmten Abstandsbereich befindet. Dazu zählen hintergrundausblendende Lichttaster, die Objekte ab einer bestimmten Entfernung ignorieren, und Lichtschranken, die den Abstand zum zugeordneten Reflektor überwachen. Einfache Lichttaster messen nur in eine Richtung. In einem Laserscanner wird durch eine Schwenk- oder Rotationsbewegung mit einem entfernungsmessenden Abtaststrahl eine Ebene, manchmal auch ein Raumbereich abgetastet. Um auf die bewegliche Abtasteinheit zu verzichten, werden sogenannte Solid State Scanner vorgeschlagen. Beispielsweise wird in der EP 2 708 914 A1 der gepulste Sendelichtstrahl einer Lichtquelle mit einem MEMS-Spiegel in X-Richtung und Y-Richtung über die abzutastende Fläche geführt. Die reflektierten Lichtpulse werden von einer SPAD-Matrix empfangen. Schließlich gibt es 3D-Lichtaufzeitkameras, die simultan eine Vielzahl von Lichtlaufzeitmessungen in ihren Pixeln durchführen. In dem Artikel Hallman, Lauri, et al. "On 2-D Rangefinding Using a ∼1 nJ/ ∼100 ps Laser Diode Transmitter and a CMOS SPAD Matrix." IEEE Photonics Journal (2018) sowie in der WO 2017/17811 A1 werden jeweils eine Entfernungsmessung mittels Pulslaufzeitverfahren und einer SPAD-Matrix beschrieben.

In herkömmlichen Solid-State-Laserscannern wird üblicherweise ein Objektiv eingesetzt, um den relevanten Überwachungsbereich auf die Lichtempfangsanordnung abzubilden.

Das ist aber nicht nur vergleichsweise kostenintensiv, Objektive verursachen auch interne Reflexionen mit sogenannten Geisterbildern, die zu Fehlentscheidungen führen und die Verfügbarkeit beeinträchtigen können.

Die EP 2 910 970 B1 offenbart einen Laserscanner mit einer Vielzahl von Sendeelementen und Empfangselementen, die kreisabschnittsförmig äquidistant angeordnet sind. Das führt zu der von herkömmlichen Laserscannern mit beweglicher Abtasteinheit gewohnten gleichmäßigen Winkelauflösung und nutzt damit zusätzliche Möglichkeiten eines Solid-State-Scanners nicht aus. Außerdem sind keine SPADs vorgesehen und dementsprechend keine Auswertungsverfahren beschrieben, die mit deren Besonderheiten umgehen können.

Aus der US 8 836 922 ist eine rotierende LIDAR-Plattform mit einem gemeinsamen Sende- und Empfangspfad bekannt. Dabei sind jeweils mehrere nebeneinander angeordnete Sende- und Empfangselemente vorgesehen, deren Strahlengang über eine reflektierende Fläche gefaltet und auf eine gemeinsame Linse geführt ist. Die Empfangselemente sind keine SPADs auf einem gemeinsamen Chip oder Wafer, sondern diskrete Komponenten, die auf der gekrümmten Kontur eines Gehäusebauteils angeordnet werden.

Die US 2006/0087640 A1 zeigt einen abstandsmessenden Sensor, bei dem mehrere nacheinander aktivierte Sendeelemente auf einer Linie jeweils Sendelinsen zugeordnet sind, die einen Bogen bilden. Auf einer ortsauflösenden Empfangsdiode (PSD, position sensing diode) wird der Empfangslichtfleck lokalisiert. Die Abstandsmessung basiert folglich auf Triangulation und nicht auf Lichtlaufzeitmessung, und SPADs werden auch hier nicht verwendet. Außerdem genügt eine Bogenanordnung allein der Sendelinsen bei flach angeordneten Sende- und Empfangselementen der Anpassung an einen großen Winkelbereich nur zu einem Teil.

Die US 2015/0034809 A1 offenbart ein Photodetektorarray zum Einsatz in einem LI DAR. Durch Anordnung einer Vielzahl von Photodetektoren auf einem flexiblen Substrat können die Photodetektoren in eine gekrümmte Ebene entsprechend der Fokalfläche eines Empfangsobjektivs gebracht werden.

Aus der US 9 442 285 B2 ist ein Array von optischen Komponenten mit anpassbarer Krümmung bekannt. Dadurch erfolgt eine Zoomanpassung.

In der DE 10 2005 006 922 A1 wird eine Vorrichtung zur Erfassung von Objekten vorgestellt, bei der Strahlungsdetektoren in beabstandeten Streifen auf einem nicht ebenen Träger angeordnet werden.

Es ist daher Aufgabe der Erfindung, eine flexiblere und genauere Anpassung eines gattungsgemäßen Sensors an die ihm zugedachte Anwendung zu ermöglichen.

Diese Aufgabe wird durch einen optoelektronischen Sensor und ein Verfahren zur Erfassung von Objekten in einem Überwachungsbereich nach Anspruch 1 beziehungsweise 15 gelöst. Der Sensor erzeugt Empfangssignale mit einer Vielzahl Lichtempfangselemente eines Lichtempfängers. Das sind vorzugsweise SPADs wie einleitend erläutert, jedes Lichtempfangselement oder Pixel weist dann eine oder mehrere Lawinenphotodiodenelemente auf, die jeweils mit einer Vorspannung oberhalb einer Durchbruchspannung vorspannbar und somit in einem Geiger-Modus betreibbar sind. Die Lichtempfangselemente sind auf einem gemeinsamen Substrat ausgebildet, das gekrümmt ist. Je nach Ausprägung dieser Krümmung nur in einer Richtung oder flächig bilden deshalb die optischen Achsen der Lichtempfänger keine Parallelenschar wie bei einem herkömmlichen ebenen Lichtempfänger, sondern entsprechend senkrecht zu der Krümmung. Eine Steuer- und Auswertungseinheit gewinnt aus den Empfangssignalen optisch erfassbare Objektinformationen, wie beispielsweise die Anwesenheit eines Objekts oder dessen Abstand.

Die Erfindung geht von dem Grundgedanken aus, die Krümmung ganz gezielt an die Anforderungen der Anwendung anzupassen. Dazu wird das Substrat auf der gekrümmten Oberfläche eines Maßkörpers angebracht, um dessen Krümmung definiert zu übernehmen. Alternativ wird eine Krümmeinrichtung eingesetzt, also eine Aktorik, welche die Krümmung des Substrats verändern kann. Das ist auch kombinierbar, indem eine in ihrer Krümmung veränderbare Maßverkörperung verwendet wird.

Die Erfindung hat den Vorteil, dass die Maßverkörperung zunächst mit hoher Präzision hergestellt wird, ohne auf Schaltungen oder das vergleichsweise empfindliche Substrat Rücksicht nehmen zu müssen. Das Substrat nimmt dann durch Anbringen auf der Maßverkörperung direkt, genau und in einem Zug diese gewünschte Form und Krümmung an. Das lässt anders als beispielsweise ein bloßes Verbiegen des Substrats durch Krafteinwirkung an einigen Punkten auch variierende Krümmungsradien zu, so dass besonders flexible Anpassungen möglich sind. Mit Hilfe einer Krümmeinrichtung kann die Anpassung sogar nachträglich erfolgen, sei es zur Justierung oder sogar dynamisch im Betrieb. Dies alles funktioniert auch mit den besonderen Signalen von SPADs, so dass deren Vorteile verwirklicht sind: hohe Empfindlichkeit mit Verstärkungsfaktoren bis zu 10⁸ sowie hohe Integrierbarkeit und geringe Kosten. So wird insgesamt eine besonders robuste und verlässliche Detektion erreicht.

Lichtempfänger und/oder Steuer- und Auswertungseinheit sind bevorzugt dafür ausgebildet, jeweils nacheinander mit einem Lichtempfangselement ein Lichtsignal zu empfangen. Der Lichtempfänger wird also sequentiell betrieben, in Analogie zu einem Laserscanner, und nicht parallel wie bei einer Kamera. Vorzugsweise werden Lichtempfangselemente, die jeweils gerade nicht an der Reihe sind, nicht nur nicht ausgelesen, sondern inaktiv geschaltet. Bei SPADs ist das dadurch möglich, dass die Biasspannung unter die Durchbruchspannung abgesenkt wird. Dadurch kommt es auch nicht zu Fremdlicht- oder Dunkelereignissen, aufgrund derer das Lichtempfangselement dann noch in Totzeit ist, wenn es dann aktiv geschaltet wird. Außerdem reduziert das die Leistungsaufnahme des Lichtempfängers.

Der Sensor weist bevorzugt einen Lichtsender zum Aussenden eines Lichtsignals in den Überwachungsbereich auf. Vorzugsweise wird das Lichtsignal moduliert, um eine Lichtlaufzeitmessung zu ermöglichen, insbesondere indem Lichtpulse erzeugt werden, die von einem jeweils angetasteten Objekt zumindest teilweise zurückgeworfen werden und dann als remittierte Lichtpulse zurückkehren.

Vorteilhafterweise erzeugt der Lichtsender eine Lichtlinie in dem Überwachungsbereich. Dazu kann eine entsprechende Sendeoptik eingesetzt werden, mit einer Zylinderlinse, einer Anordnung von Mikrozylinderlinsen, einem diffraktiven optischen Element oder dergleichen. Eine andere Möglichkeit ist eine Linienanordnung einer Vielzahl von Lichtquellen. Eine Lichtlinie eignet sich besonders im Zusammenspiel mit einer zeilenförmigen Anordnung der Lichtempfangselemente.

Der Lichtsender ist bevorzugt dafür ausgebildet, den von dem Lichtempfänger beobachteten Überwachungsbereich insgesamt auszuleuchten. Es handelt sich also um eine Flächenbeleuchtung, beziehungsweise bei einer Lichtlinie um eine Zeilenausleuchtung. Der Lichtsender ist alternativ dafür ausgebildet, nacheinander jeweils nur einen Teilbereich des Überwachungsbereichs auszuleuchten. Der Teilbereich entspricht bevorzugt gerade dem Erfassungsbereich eines Lichtempfangselements, aber es ist auch denkbar, dieses mehr oder weniger deutlich zu überstrahlen oder gezielt mehrere Lichtempfangselemente zu treffen. Es entstehen Zuordnungen von Lichtquellen und Lichtempfangselementen, die sequentiell durchgeschaltet werden können. Alternativ zu einer Mehrfachanordnung von Lichtquellen ist der Lichtsender dafür ausgebildet, die Richtung zu ändern, in die Lichtsignale ausgesandt werden. Dafür wird ein mikromechanisches System wie ein MEMS-Spiegel oder eine besondere Ansteuerung benutzt wie bei einem optical phased array. Zumindest in den Grenzen der möglichen Ablenkung kann damit der Lichtsender jeweils nacheinander anderen Lichtempfangselementen zugeordnet werden.

Die Steuer- und Auswertungseinheit ist bevorzugt dafür ausgebildet, anhand eines Empfangssignals eine Lichtlaufzeit eines ausgesandten und wieder empfangenen Lichtsignals zu bestimmen. Vorzugsweise werden Lichtpulse erzeugt, damit wird ein pulsbasiertes oder direktes Lichtlaufzeitverfahren eingesetzt, das sich besonders für SPADs eignet. Die Steuer- und Auswertungseinheit rechnet bei Bedarf die Lichtlaufzeit, die selbst schon ein Maß des Abstands in ungewohnten Einheiten ist, über die konstante Lichtgeschwindigkeit in einen metrischen Abstand um.

Für die Lichtlaufzeitmessung weist die Steuer- und Auswertungseinheit vorzugsweise mindestens einen TDC (Time-to-Digital Converter) auf. Das ist ein bekanntes und relativ einfaches Bauteil, das mit hoher zeitlicher Auflösung Lichtlaufzeiten messen kann. TDCs können direkt monolithisch in einem Kristall des Lichtempfängers integriert werden. Ein TDC kann praktisch als Stoppuhr arbeiten, die zum Sendezeitpunkt eines Lichtpulses gestartet und zum Empfangszeitpunkt durch den empfangenen remittierten Lichtpuls gestoppt wird. Umgekehrt ist auch denkbar, dass der Empfang eines remittierten Lichtpulses die Zeitmessung startet, die dann zu einem festgelegten Zeitbezug wieder angehalten wird. Das hat in einigen Implementierungen Vorteile, und der konstante Zeitversatz zwischen Sendezeitpunkt und dem festgelegten Zeitbezug lässt sich anschließend rechnerisch kompensieren.

Die Steuer- und Auswertungseinheit weist bevorzugt eine Vielzahl von Lichtlaufzeitmesseinheiten auf, insbesondere TDCs. Diese Lichtlaufzeitmesseinheiten sind jeweils einem Lichtempfangselement zugeordnet, um eine über den Lichtempfänger ortsaufgelöste Abstandsmessung zu ermöglichen. Es können auch weniger Lichtlaufzeitmesseinheiten als Lichtempfangselemente sein, indem ein interessierender Bereich ausgewählt wird. Die Zuordnung der Lichtlaufzeitmesseinheiten kann fix oder variabel sein, letzteres insbesondere indem die Lichtlaufzeitmesseinheiten zeitversetzt mit unterschiedlichen Lichtempfängern verbunden werden. Umgekehrt ist auch möglich, mehrere Lichtlaufzeitmesseinheiten für dasselbe Lichtempfangselement einzusetzen. Das ist gerade im Falle von SPADs sinnvoll, weil dann ein Lichtempfangselement vorzugsweise mehrere SPADs als Unterpixel aufweist. Diese SPADs können dann einzeln oder gruppenweise mehrere Lichtlaufzeiten je Lichtempfangselement liefern. Die Auswertung solcher als Unterpixel fungierender SPADs ist aber auch gemeinsam mit nur einer Lichtlaufzeitmesseinheit mittels einer Zusammenfassungslogik denkbar. Das ist beispielsweise eine ODER-Logik, eine Summation oder eine Koinzidenzlogik, die zum Ausfiltern von vereinzelten Störereignissen nur dann reagiert, wenn eine Mindestanzahl SPADs eine Lawine in einem sehr engen Zeitfenster auslöst.

Die Steuer- und Auswertungseinheit ist bevorzugt dafür ausgebildet, Lichtlaufzeiten mehrfach durch Messwiederholung und/oder getrennte Auswertung mehrerer Empfangssignale eines Lichtempfangselements zu messen. Jeder Abstandswert basiert dann auf einer Vielzahl von Einzelmessungen, was besonders im Falle hoher Reichweiten, starker Fremdlichtbelastung und allgemein schlechtem Signal-Rauschverhältnis zu besseren Messergebnissen führt. Messwiederholung bedeutet, dass ein weiterer Lichtpuls ausgesandt und wieder empfangen wird. Zusätzliche Lichtlaufzeitmessungen lassen sich nicht nur über die Zeit, sondern auch dadurch gewinnen, dass die einzelnen Lichtempfangselemente mehrere Unterpixel aufweisen, aus deren Empfangssignalen mehrere Lichtlaufzeiten bestimmt werden. Diese Mehrfachauswertung sollte nicht mit der jeweiligen Auswertung der Lichtempfangselemente verwechselt werden, die für eine Ortsauflösung über den Lichtempfänger zusätzlich erfolgt. Es geht hier darum, für denselben Ort mit Hilfe von Unterpixeln mehrere Messwerte für die Lichtlaufzeit zu gewinnen. Auch ganz allgemein erhöht sich die Messgenauigkeit durch Mehrfachmessung, aber bei SPADs ist das besonders vorteilhaft, weil Einzelmessungen auf ein Dunkel- oder Fremdlichtereignis zurückgehen können und damit nicht nur um eine gewisse Rauschtoleranz wie bei anderen Lichtempfangselementen abweichen, sondern gar nicht der gewünschten Lichtlaufzeit entsprechen.

Die Steuer- und Auswertungseinheit ist bevorzugt dafür ausgebildet, eine Vielzahl von gemessenen Lichtlaufzeiten in einem Histogramm zu akkumulieren, in dessen Bins gezählt wird, wie oft eine Lichtlaufzeit in einem bestimmten Lichtlaufzeitbereich gemessen wurde. Das Histogramm unterteilt den interessierenden Lichtlaufzeitbereich von Null bis zur maximalen Reichweite oder einen Teilbereich davon in vorzugsweise gleichmäßige Bins und zählt, wie oft eine jeweils in das Bin fallende Lichtlaufzeit gemessen wurde. Die Breite der Bins wird unter anderem anhand der gewünschten zeitlichen Auflösung und des vorhandenen Speichers gewählt. Die Vielzahl von Lichtlaufzeiten entsteht in der Zeit durch Messwiederholung mit jeweils einem weiteren ausgesandten Lichtpuls und/oder durch die Mehrfachauswertung von Unterpixeln eines Lichtempfangselements. Mit einem Histogramm sind statistische Auswertungen der Mehrfachmessung zur Bestimmung einer genaueren Lichtlaufzeit einfach möglich.

Das Substrat ist vorzugsweise abgedünnt und dadurch flexibel, um die Krümmung anzunehmen. Dabei wird insbesondere eine Dicke von höchstens 100 µm erreicht. Mit Substrat ist hier vorzugsweise dasjenige des Chips der Lichtempfangselemente gemeint, d.h. der Wafer oder das monokristalline Silizium und nicht lediglich ein Leiterplattenmaterial oder dergleichen wie bei einer Flexprintplatine. Die Lichtempfangselemente sind bevorzugt hochintegriert und nochmals bevorzugt gemeinsam mit Auswertungsschaltkreisen auf demselben Wafer untergebracht, etwa als ASIC (Application-Specific Integrated Circuit), und keine diskreten Bauelemente.

Die Krümmung ist bevorzugt konvex jedenfalls über große Bereiche und nochmals bevorzugt überall im Bereich der Lichtempfangselemente. Dadurch verbreitert sich der insgesamt erfasste Winkelbereich, und außerdem laufen die optischen Achsen der Lichtempfangselemente auseinander und nicht teilweise aufeinander zu, was zu Strahlkreuzungen führen würde.

Die Krümmung umfasst vorzugsweise einen Winkel von mindestens 100°. Bei konvexer Krümmung bedeutet dies, dass die optischen Achsen von Lichtempfangselementen an gegenüberliegenden Rändern des Lichtempfängers zueinander in einem Winkel von mindestens 100° stehen. Dadurch wird insgesamt ein sehr großer Winkelbereich erfasst. Für noch größere Winkelbereiche ist es denkbar, mehrere Substrate beziehungsweise Lichtempfänger nebeneinander anzuordnen.

Die Krümmung ist vorzugsweise nicht konstant. Der Lichtempfänger bildet also keinen Kreisbogen oder Kugelabschnitt. Durch die Abweichung von einer konstanten Krümmung wird eine lokal angepasste Winkelauflösung erreicht. Insbesondere ist die Krümmung in einem zentralen Bereich des Substrats geringer als außen. Das führt zu einer vorteilhaften hohen Winkelauflösung im Zentrum und einer geringeren peripheren Winkelauflösung. Solche nicht konstanten Krümmungen entstehen beispielsweise mittels eines oval geformten Maßkörpers. Die ovale Form kann sich, wie jede Krümmung, nur auf eine Richtung beziehen, womit sich dann eine Art Extrusionskörper ergibt, dessen Grundfläche in diesem Beispiel ein Oval oder eine Ellipse ist. Bei Krümmungen in beide Richtungen wird daraus ein Ellipsoid.

Dem Lichtempfänger ist bevorzugt eine Empfangsoptik zugeordnet, die eine Mikrolinsenanordnung aufweist. Dadurch ist kein Objektiv mit den einleitend genannten Nachteilen erforderlich. Es wird ein optisches Übersprechen zwischen den von den Lichtempfangselementen jeweils gebildeten Messkanälen verhindert, und damit sind gegenseitige optische Störungen und Geisterbilder unterdrückt. Die optische Entkopplung verringert Fehlmessungen oder Fehlentscheidungen des Sensors. Durch konvexe Krümmung werden die Kanäle noch schärfer separiert.

Die Mikrolinsen sind vorzugsweise auf einer gekrümmten Fläche insbesondere mit einer Krümmung entsprechend dem Substrat angeordnet. Die Mikrolinsenanordnung ist damit optimal an diejenige der Lichtempfangselemente angepasst. Vorzugsweise sind die Mikrolinsen sogar direkt auf den Lichtempfangselementen angeordnet, so dass sie die Krümmung und auch durch die Krümmeinrichtung erzeugte Krümmungsveränderungen mitvollziehen. Es ist aber auch denkbar, die Mikrolinsen in einem gewissen Abstand anzuordnen und auf einem passend gekrümmten Träger unterzubringen beziehungsweise sie mit die Krümmung einhaltenden Verbindungselementen zu versehen. Dann entsteht bei Krümmungsänderungen ein gewisser Versatz, der aber je nach Anwendung und Ausmaß der Änderungen hinnehmbar ist. Auch eine beabstandete Mikrolinsenanordnung kann eine Flexibilität aufweisen und die Krümmungsänderungen nachvollziehen.

Die Mikrolinsen liegen alternativ in einer Ebene und bilden dort ein Raster entsprechend den Durchtrittspunkten zur Krümmung des Substrats radialer Strahlen ausgehend von den Lichtempfangselementen. Das ergibt eine besonders einfache Anordnung der Mikrolinsen, die zumindest für eine feste Krümmung des Substrats ebenfalls an die Anordnung der Lichtempfangselemente angepasst ist. Das Raster der Mikrolinsen gleicht in seinem Abstand zum Lichtempfänger gerade das durch die Krümmung verursachte Auseinander- beziehungsweise Zusammengehen der optischen Achsen der Lichtempfangselemente aus.

Die Lichtempfangselemente bilden bevorzugt eine Zeilenanordnung, wobei das Substrat in Zeilenrichtung gekrümmt ist. Die Zeilenanordnung bildet damit einen Bogen, möglicherweise mit lokal variierender Krümmung oder sogar konkaven Abschnitten, und ist senkrecht zu der Zeilenanordnung vorzugsweise eben. Dabei sind auch mehrere Zeilen von Lichtempfangselementen denkbar. Außerdem kann, gerade im Falle von SPADs, jedes Lichtempfangselement mehrere Unterpixel aufweisen, die dann bevorzugt eine Spalte senkrecht zu der Zeilenanordnung bilden.

Die Krümmeinrichtung greift bevorzugt mindestens an zwei Rändern des Substrats an, um es auseinanderzuziehen oder zusammenzuschieben. Die Krümmeinrichtung greift somit außen an zwei Kanten oder an einem oder mehreren Punkten der Kante an, beispielsweise rechts und links an den Enden einer Zeilenanordnung, und vergrößert oder verkleinert die Krümmung durch entsprechende Krafteinwirkung auf das Substrat.

Der Sensor ist bevorzugt durch Anpassung der Krümmung vor einer Betriebsphase justiert. Die Krümmeinrichtung wird dann bei der Herstellung oder in einer Einrichtphase verwendet, um den Sensor zu justieren.

Die Steuer- und Auswertungseinrichtung ist bevorzugt dafür ausgebildet, die Krümmung des Substrats mit Hilfe der Krümmeinrichtung in einer Betriebsphase dynamisch anzupassen. Dadurch wird die lokale Winkelauflösung situativ an die Gegebenheiten angepasst, beispielsweise bei Einsatz in einem Fahrzeug während der Geradeausfahrt eine andere Krümmung eingestellt als in einer Kurve.

Vorzugsweise ist der Maßkörper formveränderlich. Durch solche Änderungen wird die Krümmung auch des darauf angebrachten Substrats angepasst. Damit hat der Maßkörper eine Doppelfunktion, indem durch den Maßkörper eine anfängliche Krümmung vorgegeben wird, die dann in zusätzlicher Funktion der Krümmeinrichtung weiter veränderbar ist.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung eines optoelektronischen Sensors mit Lichtempfangselementen auf einem Substrat veränderlicher Krümmung;
- Fig. 2: eine Detailansicht eines Lichtempfängers auf einem Substrat veränderlicher Krümmung;
- Fig. 3: eine schematische Blockdarstellung einer weiteren Ausführungsform eines optoelektronischen Sensors mit Lichtempfangselementen auf einem Substrat, dem die Krümmung durch Anbringen auf einer Maßverkörperung aufgeprägt ist;
- Fig. 4: eine Detailansicht der gekrümmten Fläche des Lichtempfängers zur Veranschaulichung einer lokalen Anpassung der Winkelauflösung durch die Krümmung;
- Fig. 5: eine Ansicht ähnlich Figur 5, jedoch mit veränderlicher Krümmung; und
- Fig. 6: eine schematische Blockdarstellung einer weiteren Ausführungsform eines optoelektronischen Sensors mit einer an die durch die Krümmung veränderten Strahlrichtungen angepassten Mikrooptik.

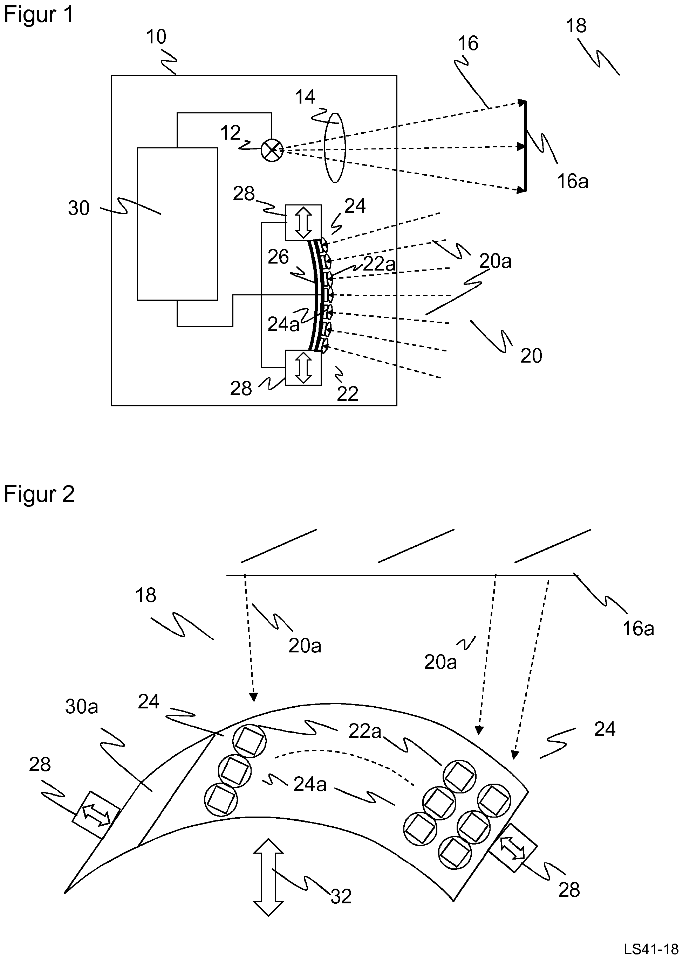

Figur 1 zeigt eine vereinfachte schematische Blockdarstellung eines optoelektronischen Sensors 10 zur Messung von Abständen mittels eines Lichtlaufzeitverfahrens. Ein Lichtsender 12, beispielsweise eine LED oder eine Laserlichtquelle vorzugsweise mit hoher Leistung von mindestens 10 W für Sensorreichweiten von zumindest mehreren Metern, sendet durch eine Sendeoptik 14 Lichtsignale 16 in einen Überwachungsbereich 18. Für ein bevorzugtes Pulslaufzeitverfahren sind das kurze Lichtpulse von wenigen Nanosekunden oder sogar im Pikosekundenbereich. Die Sendeoptik 14 ist beispielhaft als einfache hier zylindrisch wirkende Sendelinse dargestellt, um in dem Überwachungsbereich 18 eine Lichtlinie 16a zu erzeugen. Stattdessen kann auch eine kompliziertere Optik eingesetzt werden, und eine Lichtlinie 16a entsteht auch mit anderen Mustererzeugungselementen, etwa eine Anordnung von Mikrozylinderlinsen oder einem diffraktiven optischen Element.

Trifft das Lichtsignal 16 im Überwachungsbereich 18 auf ein Objekt, so kehrt ein reflektiertes oder remittiertes Lichtsignal 20 über eine Empfangsoptik 22 zu einem Lichtempfänger 24 zurück. Die Empfangsoptik 22 ist vorteilhafterweise als Vielzahl von Mikrolinsen 22a ausgeführt. Der Lichtempfänger 24 weist eine Vielzahl von Lichtempfangselementen 24a auf. Jedes der Lichtempfangselemente 24a beobachtet durch eine der Mikrolinsen 22a der Empfangsoptik 22 nur einen Teil des linienförmig von dem Lichtsender 12 beleuchteten Überwachungsbereichs 18, empfängt also nur ein remittiertes Lichtsignal 20a aus einer bestimmten Richtung. Die Lichtempfangselemente 24a sind auf einem gekrümmten Substrat 26 untergebracht, so dass sich die Richtungen der jeweils empfangenen remittierten Lichtsignale 20a besonders deutlich unterscheiden. Die Krümmung des Substrats 26 ist mittels einer Krümmeinrichtung 28 veränderbar, also einer Aktorik, die auf das Substrat 26 eine einstellbare Kraft ausübt, um dessen Krümmung zu vergrößern oder zu verringern. Die Krümmeinrichtung 28 ist hier elektrisch ausgeführt, beispielsweise mittels einer Piezoaktorik, und kann alternativ mechanisch ausgebildet sein. Die Empfangsanordnung mit Empfangsoptik 22 und dem Lichtempfänger 24 auf einem gekrümmten Substrat 26 wird weiter unten noch genauer erläutert.

Es ist möglich, die remittierten Lichtsignale 20a aus den verschiedenen Richtungen gleichzeitig zu empfangen wie bei einer Lichtlaufzeitkamera. Der Sensor 10 ist aber vorzugsweise ein Solid-State-Scanner, der die Lichtempfangselemente 24a sequentiell einzeln oder gruppenweise aktiviert oder ausliest. Ob und inwieweit Lichtempfangselemente 24a parallel betrieben werden, hängt unter anderem von der Anwendung und der verfügbaren Verarbeitungsgeschwindigkeit ab. Dabei bilden die Lichtempfangselemente 24a vorzugsweise eine Empfangszeile, um insgesamt einen Winkelausschnitt einer Ebene als Überwachungsbereich 18 abzutasten, wobei die von dem Lichtsender 12 erzeugte Linie den insgesamt erfassten Winkelausschnitt der Ebene beleuchtet oder gegebenenfalls auch in gewissem Maße überstrahlt. Ein nicht einschränkendes Zahlenbeispiel ist eine Anordnung von 256 Lichtempfangselementen 24a, die aufgrund der Krümmung gemeinsam einen besonders großen Öffnungswinkel von 100° und mehr abdecken können. Andere Anzahlen und Öffnungswinkel, aber auch eine Matrixanordnung mit Ausdehnung quer zur Zeilenrichtung und Erfassung eines Raumabschnitts ist bei entsprechender Anpassung von Lichtsender 12 und Sendeoptik 14 als Flächenbeleuchtung auch vorstellbar.

Die Lichtempfangselemente 24a sind vorzugsweise von Lawinenphotodiodenelementen im Geigermodus oder SPADs gebildet, wobei auch mehrere SPADs gemeinsam als Gruppe beispielsweise über deren Summensignal oder sonstige Kombination zu einem Lichtempfangselement 24a zusammengefasst sein können. SPADs lassen sich besonders vorteilhaft darüber deaktivieren, dass die Biasspannung unter die Schwelle der Durchbruchspannung abgesenkt wird. Sie verlieren dann um mehrere Größenordnungen an Empfindlichkeit und können deshalb als ausgeschaltet angesehen werden. Das Inaktivschalten hat auch den Vorteil, dass keine unnötigen Lawinen ausgelöst werden, die zur Stromaufnahme und Wärmeentwicklung beitragen. So ist bei einem sequentiellen Scanvorgang möglich, die Lichtempfangselemente 24a selektiv nacheinander zu aktivieren und damit die Leistungsaufnahme des Lichtempfängers 24 zu begrenzen.

Eine Steuer- und Auswertungseinheit 30 bestimmt anhand der Empfangssignale der Lichtempfangselemente 24a die Lichtlaufzeit und daraus den Abstand zum jeweils angetasteten Objektpunkt, von dem das remittierte Lichtsignal 20a zurückgeworfen wurde. Eine beispielhafte Umsetzung basiert auf einem oder mehreren TDCs (Time-to-Digital Converter), der durch einen ausgesandten Lichtpuls gestartet und durch einen empfangenen remittierten Lichtpuls gestoppt wird, oder der alternativ durch einen empfangenen Lichtpuls gestartet und zu einem späteren festgelegten Zeitpunkt gestoppt wird. Die Steuer- und Auswertungseinheit 30 kann abweichend von der Darstellung zumindest teilweise gemeinsam mit dem Lichtempfänger 24 ausgebildet sein, beispielsweise indem ein oder mehrere TDCs auf dem Lichtempfänger 24 vorgesehen sind. Dann wird die verfügbare Fläche eines gemeinsamen Chips (z.B. ASIC, Application-Specific Integrated Circuit) zwischen lichtempfindlichen Bereichen der Lichtempfangselemente 24a und ihnen einzeln, in Gruppen oder gemeinsam zugeordnete Schaltkreise zu deren Auswertung und Ansteuerung aufgeteilt.

Gerade im Zusammenhang mit SPADs, die auch bei einem minimalen Stör- oder Dunkelereignis einen starken Puls im Empfangssignal erzeugen, aber auch sonst insbesondere im Falle eines erwarteten schlechten Signal-Rauschverhältnisses basiert die Messung eines Abstandswerts vorzugsweise nicht auf nur einer einzigen Messung der Lichtlaufzeit. Mehrere Einzellichtlaufzeiten lassen sich auf zweierlei Weise gewinnen, nämlich einerseits indem wiederholt Lichtsignale 16 ausgesandt und die wieder empfangenen Lichtsignale 20 ausgewertet werden und andererseits durch mehrere Unterpixel oder SPADs je Lichtempfangselement 24a, die einzeln oder gruppenweise ausgewertet werden und somit mehrere Messwerte für die Lichtlaufzeit pro Lichtsignal 16, 20 von praktisch demselben angetasteten Objektpunkt liefern. Je nach Ausführungsform wird einer dieser Wege benutzt, oder es werden beide kombiniert, um eine breitere statistische Basis für die Bestimmung eines Abstandswerts zu erhalten. Eine bevorzugte Ausführungsform sammelt Einzellichtlaufzeiten in einem Histogramm, vorzugsweise einem Histogramm je Lichtempfangselement 24a, und bestimmt anschließend einen gemeinsamen Messwert der Lichtlaufzeit aus dem jeweiligen Histogramm.

Die in Figur 1 dargestellte Anordnung der Komponenten des Sensors 10 ist rein beispielhaft zu verstehen. So zeigt Figur 1 einen Lichtsender 12 mit einer Sendeoptik 14, die eine Lichtlinie 16a erzeugt. Das eignet sich für eine zeilenförmige Anordnung von Lichtempfangselementen 24a, aber für andere Geometrien des Lichtempfängers 24 ist auch ein entsprechend angepasster Beleuchtungsbereich möglich. Außerdem kann anstelle einer simultanen Ausleuchtung mittels Linien- oder Flächenbeleuchtung auch eine Vielzahl von einzeln oder gruppenweise ansteuerbaren Einzellichtquellen verwendet werden, beispielsweise eine VCSEL-Zeile. Andere Einzellichtquellen, wie LEDs oder Kantenemitter, sind ebenso denkbar. Derartige Einzellichtquellen werden dann gemeinsam mit zugeordneten Lichtempfangselementen 24a aktiviert, so dass zeitlich separierte Messkanäle entstehen. Dabei können die Optiken 14, 22 nach Möglichkeit zumindest über einen gewissen Tiefenschärfenbereich für eine scharfe Projektion und Abbildung sorgen. Auf diese Weise wird das Sendelicht deutlich selektiver eingesetzt als bei einer Flächen- oder Linienbeleuchtung. Als weitere Alternative zu einer Vielzahl von Einzellichtquellen ist eine sendeseitige Ablenkeinrichtung vorstellbar, die das Lichtsignal 16 in eine jeweils gewünschte Richtung umlenkt. Dazu eignet sich eine bewegliche Mikrooptik wie ein MEMS-Spiegelsystem oder ein optical phased array oder dergleichen.

Es sind neben den schon genannten Variationsmöglichkeiten, die auch bei den weiteren Ausführungsformen denkbar sind, alternative optische Aufbauten bekannt, etwa statt der biaxialen Sende- und Empfangspfade ein koaxialer Aufbau in Autokollimationsanordnung etwa mit einem Strahlteiler und einer gemeinsamen Optik oder einer Anordnung des Lichtsenders 12 aus der Papierebene heraus vor oder hinter dem Lichtempfänger 24. Hier ist jeder insbesondere von Triangulationstastern oder hintergrundausblendenden Lichttastern an sich bekannte Aufbau möglich. Weiter ist eine Ausführungsform als Laserscanner mit einer beweglichen Ablenkeinheit zur periodischen Abtastung des Überwachungsbereichs denkbar. Die drehbare Ablenkeinheit ist je nach Ausführungsform ein Schwenk- oder Drehspiegel, insbesondere Polygonspiegelrad, zur periodischen Strahlablenkung bei stationär angeordnetem Lichtsender und Lichtempfänger, oder alternativ eine mitdrehende Ablenkeinheit mit Lichtsender und Lichtempfänger, in der dann praktisch ein optischer Messkopf entsprechend Figur 1 rotiert oder verschwenkt wird.

Figur 2 zeigt eine vergrößerte Darstellung des gekrümmten Lichtempfängers 24. Die Lichtempfangselemente 24a bilden eine Zeilenanordnung, wobei hier beispielhaft drei Zeilen gezeigt sind. In anderen Ausführungsformen ist überhaupt nur eine Zeile vorgesehen. Mehrere Zeilen können tatsächlich für eine Ortsauflösung senkrecht zur Zeile genutzt werden. Vorzugsweise sind aber die jeweiligen Spalten mehrere Lawinenphotodiodenelemente im Geigermodus oder SPADs, die zu jeweils einem Lichtempfangselement 24a zusammengefasst sind. In Zeilenrichtung werden Messkanäle entsprechend der Anzahl Spalten gebildet. Die einzelnen Winkelauflösungen addieren sich zu einem Gesamtwinkelbereich, wobei die einzelnen Winkelauflösungen untereinander bei konstanter Krümmung des Substrats 26 gleich sind und sonst entsprechend der Krümmung voneinander abweichen.

Die Mikrolinsen 22a der Empfangsoptik 22 sind hier unmittelbar auf den Lichtempfangselementen 24a oder SPADs angeordnet. Dadurch weist die Anordnung der Mikrolinsen 22a automatisch ebenfalls die Krümmung des Substrats 26 auf. Die Mikrolinsen 22a können alternativ auf einem eigenen Träger in etwas Abstand zu dem Substrat 26 angeordnet werden. Mikrolinsen 22a können abweichend von der Darstellung mehrere Lichtempfangselemente 24a überdecken, insbesondere innerhalb einer Spalte. Der Einsatz von Mikrooptiken erlaubt es, die Empfangsapertur zu verbessern sowie den Füllfaktor (PDE) zu erhöhen. Die implizite optische Trennung verhindert das unerwünschte Übersprechen zwischen den Messkanälen. Geisterbilder und ähnliche Artefakte wie bei einem Objektiv werden somit vermieden.

Das Substrat 26 ist vorzugsweise ein einziger Siliziumkristall, auf dem die Lichtempfangselemente 24a oder SPADs integriert sind. In Figur 2 ist ein Bereich 30a für Teile der Steuer- und Auswertungseinheit auf demselben Substrat 26 vorgesehen, beispielsweise für die TDCs zur Lichtlaufzeitmessung.

Mit heutiger Technik lassen sich Wafer bis auf etwa 10 µm abdünnen (grinding), und damit können Biegeradien unter 10 mm erreicht werden. Wird also ein Substrat 26 entsprechend geringer Dicke von beispielsweise 100 µm oder weniger verwendet, so lässt es sich krümmen, und damit deckt der Lichtempfänger 24 insgesamt einen Winkelbereich von 100°, 120° oder mehr ab.

In Figur 2 ist die Krümmeinrichtung 28 weiterhin rein schematisch gezeigt. Sie greift hier seitlich an den Rändern des Substrats 26 beziehungsweise an den Enden der Zeilenanordnung an. So entstehen effektiv Verschiebungsvektoren der Ankerpunkte des Substrats 26. Durch jeweilige Verschiebung in geeigneten nicht materialzerstörenden Grenzen hebt oder senkt sich der innere Bereich der Zeilenanordnung, wie durch einen Pfeil 32 angedeutet. Damit wird eine größere oder geringere Krümmung eingestellt.

Die Krümmung kann auf diese Weise einerseits für eine Justage während der Produktion zum Ausgleich von Produktionstoleranzen oder in einer Einrichtphase zur Anpassung auf eine bestimmte Anwendungssituation genutzt eingestellt werden. Im eigentlichen Betrieb bleibt die Krümmung dann statisch. Aber auch im Betrieb kann eine Änderung der Krümmung zur dynamischen Anpassung hilfreich sein. Als ein Beispiel sei die Führung eines insbesondere führerlosen Fahrzeugs (AGV, automated guided vehicle, oder AGC, automated guided container) genannt. Die Winkelauflösung wird dabei dynamisch verändert, um den Sensor 10 auf unterschiedliche Fahrsituationen wie Änderungen der Fahrtgeschwindigkeiten, Kurven- oder Geradeausfahrt einzustellen. In einem weiteren Beispiel wird die Krümmung so eingestellt, dass derselbe Winkel von mindestens zwei Lichtempfangselementen 24a beobachtet wird, um durch diese Redundanz oder Zweikanaligkeit eine sichere Auswertung im Sinne einschlägiger Sicherheitsnormen zu erhalten.

In Figur 2 ist das Substrat 26 bogenförmig oder konvex nur in Zeilenrichtung und mit festem Biegeradius gekrümmt. Alternativ kann die Krümmung nicht konstant sein, also über die Zeile variieren, auch mit ebenen oder gar konkaven Teilabschnitten. Weiterhin ist eine flächige Krümmung zusätzlich quer zur Zeilenrichtung vorstellbar. Die Krümmeinrichtung 28 und deren Angriffspunkte sind dann zu variieren, insbesondere auch mit Angriffspunkten im Inneren der Fläche des Lichtempfängers 24a für Bereiche, in denen die Krümmung von einer konstanten Krümmung abweichen soll. Sollen größere Winkelbereiche erfasst werden, als das mit einem einzigen Substrat 26 bei gegebener Ausdehnung in Zeilenrichtung durch Krümmung erreichbar ist, so können auch mehrere Substrate 26 und damit Lichtempfänger 24 oder ASICs ringförmig nebeneinander angeordnet werden.

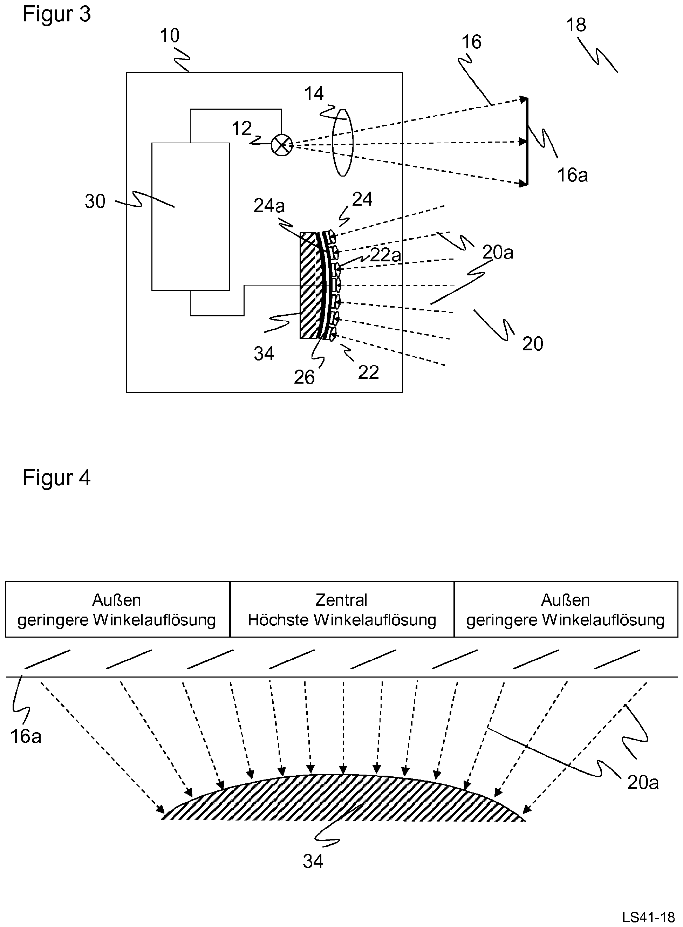

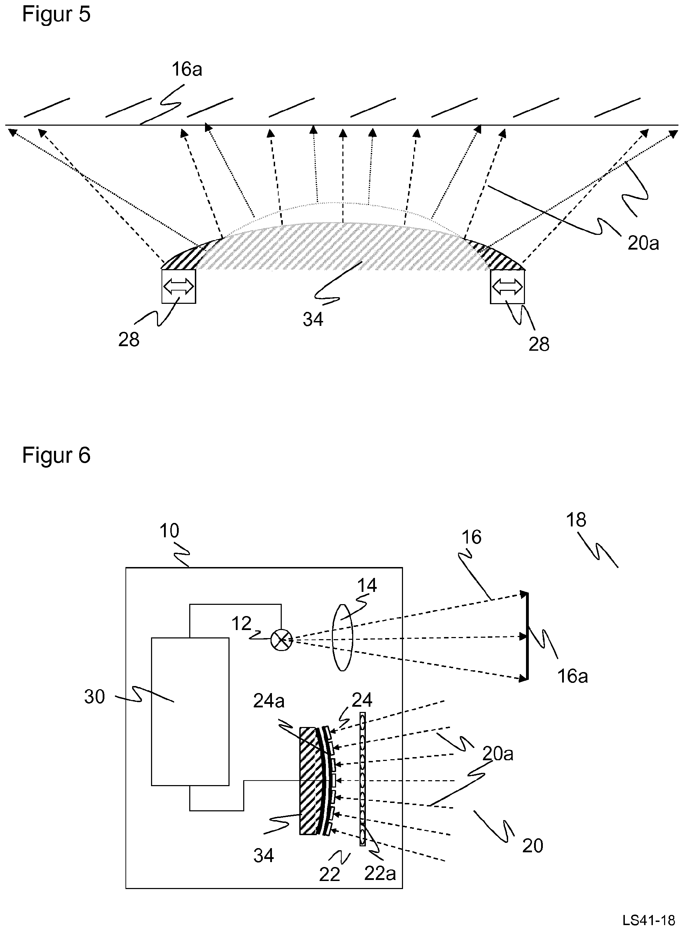

Figur 3 zeigt eine Blockdarstellung einer weiteren Ausführungsform des optoelektronischen Sensors 10. Im Unterschied zu Figur 1 ist hier das gekrümmte Substrat 26 des Lichtempfängers 24 auf einem Maßkörper 34 (reference shape) angebracht und übernimmt daher die Krümmung von dessen Oberfläche. Eine Krümmeinrichtung 28 ist hier zunächst nicht vorgesehen, kann aber ergänzt werden und verformt insbesondere den Maßkörper 34, wie später unter Bezugnahme auf Figur 5 noch erläutert wird. Es sei nochmals darauf hingewiesen, dass vergleichbare Krümmungen auch ohne den Maßkörper 34 erreicht werden.

Der Maßkörper 34 kann vorab durch einen beliebigen Herstellungsprozess in die gewünschte Form mit der Krümmung gebracht werden. Dadurch wird das Substrat 26 bei der Einstellung der gewünschten Krümmung so wenig belastet wie möglich, indem es direkt in einem Zug durch Anbringen auf dem Maßkörper 34 gekrümmt wird. Außerdem lässt sich durch die freie Wahl des Herstellungsprozesses des Maßkörpers 34, beispielsweise Spritzguss aus einem hochpräzisen Werkzeug, die Krümmung besonders genau vorgeben, und die möglichen Formgebungen sind wesentlich vielfältiger, als wenn das Substrat 26 nur in sich gekrümmt wird.

Figur 4 zeigt ein Beispiel eines ovalen Maßkörpers 34. In dieser Darstellung werden Substrat 26 und Lichtempfänger 24 nicht separat dargestellt, da die Krümmung dem Maßkörper entspricht. Mittels Maßkörper 34 sind nicht nur konstante Krümmungen oder Kreisbogen und Kugelabschnitte möglich, sondern praktisch beliebige Konturen, solange das Material des Substrats 26 keine zu großen belastenden Krümmungen erfährt. Damit sind für die jeweilige Anwendung maßgeschneiderte Winkelauflösungen möglich. Figur 4 zeigt eines der vielfältigen möglichen Beispiele, hier mit einer höheren Winkelauflösung im Zentrum und einer geringeren peripheren Winkelauflösung, angelehnt an das menschliche Auge. Ein zugehöriges Anwendungsbeispiel ist wiederum ein Fahrzeug, bei dem zur Steuerung der Weiterfahrt die höchste Winkelauflösung in einer zentralen Zone benötigt wird. In den äußeren Zonen genügt eine deutlich geringere Winkelauflösung als Orientierung für prädiktive Steuerungsfunktionen. Es ist vorstellbar, im Zentrum auch eine höhere Entfernungsauflösung durch Anpassung der Anzahl wiederholter Messungen oder sonstige Maßnahmen anzustreben.

Figur 5 zeigt nochmals die Situation der Figur 4 und zusätzlich überlagert eine mittels Krümmeinrichtung 28 veränderte Form des Maßkörpers 34. Der Maßkörper 34 ist dazu beispielsweise aus einem verformbaren Material hergestellt, so dass durch Krafteinwirkung der Krümmeinrichtung 28 für eine Justage oder dynamisch im Betrieb unterschiedliche Krümmungen des Substrats 26 eingestellt werden. Der Maßkörper 34 hat in diesem Fall eine Doppelfunktion, da nicht nur einmalig eine Krümmung vorgegeben wird, sondern sich Veränderungen des Maßkörpers 34 durch entsprechende Angriffspunkte der Krümmeinrichtung 28 an dem Substrat 26 erreichen lassen, allerdings bei komplexeren Geometrien der Maßkörper 34 deutliche Vorteile hat.

Figur 6 zeigt eine Blockdarstellung einer weiteren Ausführungsform des optoelektronischen Sensors 10. Die Darstellung basiert auf Figur 3 mit einem Maßkörper 34, stattdessen könnte ebenso die Figur 1 oder eine der anderen bisher beschriebenen Varianten als Ausgangspunkt gewählt werden. Der anhand der Figur 6 zu erläuternde Unterschied betrifft die Empfangsoptik 22. In den bisherigen Ausführungsformen sind Mikrolinsen 22a der Empfangsoptik direkt auf dem Lichtempfänger 24 angeordnet. Das ist auch vorteilhaft, weil die Mikrolinsen 22a dann die Krümmung einschließlich deren Änderungen automatisch mittvollziehen. Trotzdem ist auch vorstellbar, ein separates Mikrolinsenfeld als Empfangsoptik 22 einzusetzen, etwa weil dies die Herstellung erleichtert. Figur 6 zeigt eine Variante mit einem ebenen Mikrolinsenfeld. Wegen des Abstands zwischen Empfangsoptik 22 und Lichtempfänger 24 weicht das Raster der Mikrolinsen 22a von demjenigen der Lichtempfangselemente 24a ab, damit deren optische Achsen nach Möglichkeit zentral durch die Mikrolinsen 22a verlaufen. Bei einer konstanten Krümmung des Lichtempfängers 24 genügt dazu eine einfache Streckung in der Ebene, das Muster der Anordnung von Lichtempfangselementen 24a und Mikrolinsen 22a als solches bleibt gleich. Bei komplexerem Krümmungsverlauf wird das Raster der Mikrolinsen 22a entsprechend angepasst, damit weiterhin die Mikrolinsen 22a in der beabstandeten Anordnung der Empfangsoptik 22 am Durchstoßpunkt der optischen Achsen der Lichtempfangselemente 24a liegen.

Alternativ kann ohne Darstellung ein Mikrolinsenfeld der Empfangsoptik 22 auf einem entsprechend dem Substrat 26 gekrümmten Träger angeordnet werden, oder die Mikrolinsen 22a mit Verbindungselementen untereinander werden als gekrümmtes Mikrolinsenfeld hergestellt. Dabei kann sogar ein flexibles Material gewählt werden, und durch mehrere Abstützungen der Empfangsoptik 22 auf dem Substrat 26 wird gewährleistet, dass das Mikrolinsenfeld auch im Abstand zu dem Lichtempfänger 24 dessen jeweilige Krümmungsänderungen nachvollzieht.

## Patentansprüche

1. Optoelektronischer Sensor (10) zur Erfassung von Objekten in einem Überwachungsbereich (18), der einen Lichtsender (12) zum Aussenden eines Lichtsignals (16) in den Überwachungsbereich (18), einen Lichtempfänger (24) mit einer Vielzahl von Lichtempfangselementen (24a) auf einem Substrat (26) zum Erzeugen von Empfangssignalen, sowie eine Steuer- und Auswertungseinheit (30) aufweist, um aus den Empfangssignalen Objektinformationen zu gewinnen und anhand eines Empfangssignals eine Lichtlaufzeit eines ausgesandten und wieder empfangenen Lichtsignals (16, 20) zu bestimmen, wobei das Substrat (26) eine Krümmung aufweist,
**dadurch gekennzeichnet,**
**dass** die Steuer- und Auswertungseinrichtung (30) dafür ausgebildet ist, die Krümmung des Substrats (26) mit Hilfe einer Krümmeinrichtung (28) des Sensors (10) dynamisch anzupassen.

2. Sensor (10) nach Anspruch 1,wobei die Lichtempfangselemente (24a) als Lawinenphotodiodenelemente ausgebildet sind, die jeweils mit einer Vorspannung oberhalb einer Durchbruchspannung vorspannbar und somit in einem Geiger-Modus betreibbar sind.

3. Sensor (10) nach Anspruch 1 oder 2,
wobei der Lichtsender (12) eine Lichtlinie (16a) in dem Überwachungsbereich (18) erzeugt.

4. Sensor (10) nach einem der vorhergehenden Ansprüche,
wobei das Substrat (26) abgedünnt und dadurch flexibel ist, um die Krümmung anzunehmen.

5. Sensor (10) nach einem der vorhergehenden Ansprüche,
wobei die Krümmung konvex ist.

6. Sensor (10) nach einem der vorhergehenden Ansprüche,
wobei die Krümmung einen Winkel von mindestens 100° umfasst.

7. Sensor (10) nach einem der vorhergehenden Ansprüche,
wobei die Krümmung in einem zentralen Bereich des Substrats (26) geringer ist als außen.

8. Sensor (10) nach einem der vorhergehenden Ansprüche,
wobei dem Lichtempfänger (24) eine Empfangsoptik (22) zugeordnet ist, die eine Mikrolinsenanordnung (22a) aufweist.

9. Sensor (10) nach Anspruch 9,
wobei die Mikrolinsen (22a) in einer Ebene liegen und dort ein Raster entsprechend den Durchtrittspunkten zur Krümmung des Substrats (26) radialer Strahlen ausgehend von den Lichtempfangselementen (24a) bilden oder wobei die Mikrolinsen (22a) auf einer gekrümmten Fläche insbesondere mit einer Krümmung entsprechend dem Substrat (26) angeordnet sind.

10. Sensor (10) nach einem der vorhergehenden Ansprüche,
wobei die Lichtempfangselemente (24a) eine Zeilenanordnung bilden, und wobei das Substrat (26) in Zeilenrichtung gekrümmt ist.

11. Sensor (10) nach einem der vorhergehenden Ansprüche,
wobei die Krümmeinrichtung (28) an mindestens zwei Rändern des Substrats (26) angreift, um es auseinanderzuziehen oder zusammenzuschieben.

12. Sensor (10) nach einem der vorhergehenden Ansprüche,
der durch Anpassung der Krümmung vor einer Betriebsphase justiert ist.

13. Sensor nach einem der vorhergehenden Ansprüche,
wobei das Substrat (26) auf einer gekrümmten oder oval geformten Oberfläche eines Maßkörpers (34) angebracht ist.

14. Sensor nach Anspruch 13,
wobei der Maßkörper (34) formveränderlich und mit Hilfe einer Krümmeinrichtung (28) auf unterschiedliche Krümmungen einstellbar ist.

15. Verfahren zur Erfassung von Objekten in einem Überwachungsbereich (18), bei dem ein Lichtsignal in den Überwachungsbereich (18) ausgesandt und mit einer Vielzahl von Lichtempfangselementen (24a) auf einem gekrümmten Substrat (26) Empfangssignale erzeugt werden, wobei aus den Empfangssignalen Objektinformationen gewonnen werden und anhand eines Empfangssignals eine Lichtlaufzeit eines ausgesandten und wieder empfangenen Lichtsignals (16, 20) bestimmt wird,
**dadurch gekennzeichnet,**
**dass** die Krümmung des Substrats (26) mit Hilfe einer Krümmeinrichtung (28) dynamisch angepasst wird.

## Claims

1. An optoelectronic sensor (10) for detecting objects in a monitored area (18) comprising a light transmitter (12) for transmitting a light signal (16) into the monitored area (18), a light receiver (24) having a plurality of light receiving elements (24a) on a substrate (26) for generating received signals, and a control and evaluation unit (30) for obtaining object information from the received signals and for determining a light time of flight of a transmitted and received light signal (16, 20) on the basis of a received signal, the substrate (26) having a curvature,
**characterized in that** the control and evaluation unit (30) is configured to dynamically adapt the curvature of the substrate (26) by means of a curving device (28) of the sensor (10).

2. The sensor (10) according to claim 1,
wherein the light receiving elements (24a) are configured as avalanche photodiode elements, each of which can be biased with a bias voltage above a breakdown voltage and can thus be operated in a Geiger mode.

3. The sensor (10) according to claim 1 or 2,
wherein the light transmitter (12) generates a light line (16a) in the monitoring area (18).

4. The sensor (10) according to any of the preceding claims,
wherein the substrate (26) is thinned and thus flexible to assume the curvature.

5. The sensor (10) according to any of the preceding claims,
where the curvature is convex.

6. The sensor (10) according to any of the preceding claims,
wherein the curvature comprises an angle of at least 100°.

7. The sensor (10) according to any of the preceding claims,
wherein the curvature in a central region of the substrate (26) is less than on the outside.

8. The sensor (10) according to any of the preceding claims,
wherein the light receiver (24) is associated with a receiving optic (22) comprising a microlens array (22a).

9. The sensor (10) according to claim 8,
wherein the microlenses (22a) are arranged in a plane and form a raster corresponding to the points of passage of radial rays with respect to the curvature of the substrate (26) starting from the light-receiving elements (24a), or wherein the microlenses (22a) are arranged on a curved surface, in particular with a curvature corresponding to the substrate (26).

10. The sensor (10) according to any of the preceding claims,
wherein the light receiving elements (24a) form a line array, and wherein the substrate (26) is curved in the line direction.

11. The sensor (10) according to any of the preceding claims,
wherein the curving device (28) engages at least two edges of the substrate (26) to pull it apart or push it together.

12. The sensor (10) according to any of the preceding claims,
which is adjusted by adjusting the curvature before an operating phase.

13. The sensor (10) according to any of the preceding claims,
wherein the substrate (26) is mounted on a curved or oval shaped surface of a reference body (34).

14. The sensor (10) according to claim 13,
wherein the reference body (34) is variable in shape and adjustable to different curvatures by means of a curving device (28).

15. A method for detecting objects in a monitored area (18), wherein a light signal is transmitted into the monitored area (18) and received signals are generated with a plurality of light receiving elements (24a) on a curved substrate (26), wherein object information is obtained from the received signals and a light time of flight of a transmitted and received light signal (16, 20) is determined on the basis of a received signal,
**characterized in that** the curvature of the substrate (26) is dynamically adapted by means of a curving device (28).

## Revendications

1. Capteur optoélectronique (10) pour la détection d'objets dans une zone à surveiller (18), comportant un émetteur de lumière (12) pour émettre un signal lumineux (16) dans la zone à surveiller (18), un récepteur de lumière (24) comprenant une multitude d'éléments de réception de lumière (24a) sur un substrat (26) pour générer des signaux de réception, et une unité de commande et d'évaluation (30) pour obtenir des informations d'objet à partir des signaux de réception et pour déterminer, sur la base d'un signal de réception, un temps de parcours de lumière d'un signal lumineux (16, 20) émis et reçu, le substrat (26) présentant une courbure,
**caractérisé en ce que**
l'unité de commande et d'évaluation (30) est réalisée pour adapter dynamiquement la courbure du substrat (26) à l'aide d'un dispositif d'adaptation de courbure (28) du capteur (10).

2. Capteur (10) selon la revendication 1,
dans lequel les éléments de réception de lumière (24a) sont réalisés sous forme d'éléments de photodiode à avalanche, qui peuvent être polarisés chacun avec une tension de polarisation supérieure à une tension de claquage et peuvent ainsi fonctionner en mode Geiger.

3. Capteur (10) selon la revendication 1 ou 2,
dans lequel l'émetteur de lumière (12) génère une ligne de lumière (16a) dans la zone à surveiller (18).

4. Capteur (10) selon l'une des revendications précédentes,
dans lequel le substrat (26) est aminci et donc flexible pour prendre ladite courbure.

5. Capteur (10) selon l'une des revendications précédentes,
dans lequel la courbure est convexe.

6. Capteur (10) selon l'une des revendications précédentes,
dans lequel la courbure présente un angle d'au moins 100°.

7. Capteur (10) selon l'une des revendications précédentes,
dans lequel la courbure est plus faible dans une zone centrale du substrat (26) qu'à l'extérieur.

8. Capteur (10) selon l'une des revendications précédentes,
dans lequel une optique de réception (22) est associée au récepteur de lumière (24), qui présente un ensemble de microlentilles (22a).

9. Capteur (10) selon la revendication 8,
dans lequel les microlentilles (22a) se trouvent dans un plan et y forment une trame correspondant aux points de passage vers la courbure du substrat (26) de rayons radiaux émanant des éléments de réception de lumière (24a), ou les microlentilles (22a) sont disposées sur une surface courbée, en particulier avec une courbure correspondant à celle du substrat (26).

10. Capteur (10) selon l'une des revendications précédentes,
dans lequel les éléments de réception de lumière (24a) forment une disposition en lignes, et le substrat (26) est courbé dans la direction des lignes.

11. Capteur (10) selon l'une des revendications précédentes,
dans lequel le dispositif d'adaptation de courbure (28) attaque sur au moins deux bords du substrat (26) afin de l'étirer ou de le comprimer.

12. Capteur (10) selon l'une des revendications précédentes,
qui est ajusté par adaptation de la courbure avant une phase de fonctionnement.

13. Capteur selon l'une des revendications précédentes,
dans lequel le substrat (26) est monté sur une surface courbée ou de forme ovale d'un corps de mesure (34).

14. Capteur selon la revendication 13,
dans lequel le corps de mesure (34) est de forme variable et est réglable à différentes courbures à l'aide d'un dispositif d'adaptation de courbure (28).

15. Procédé de détection d'objets dans une zone à surveiller (18),
dans lequel un signal lumineux est émis dans la zone à surveiller (18), et des signaux de réception sont générés par une multitude d'éléments de réception de lumière (24a) sur un substrat courbé (26), des informations d'objet sont obtenus à partir des signaux de réception, et un temps de parcours de lumière d'un signal lumineux (16, 20) émis et reçu est déterminé sur la base d'un signal de réception,
**caractérisé en ce que**
la courbure du substrat (26) est adaptée dynamiquement à l'aide d'un dispositif d'adaptation de courbure (28).
